# EUROPÄISCHE PATENTSCHRIFT

(11) **EP 2 366 643 B1**
(45) Veröffentlichungstag und Bekanntmachung des Hinweises auf die Patenterteilung: **08.02.2012**
(21) Anmeldenummer: 10156917.6
(22) Anmeldetag: 18.03.2010
(51) Int. Cl.: B65G 57/081, B65B 35/58

(54) **Vorrichtung zum Übergeben und Ineinanderstapeln von Blisterverpackungen**
Device for transferring and stacking blister packaging
Dispositif de transmission et d'empilement d'emballages transparents les uns dans les autres

(43) Veröffentlichungstag der Anmeldung: 21.09.2011
(73) Patentinhaber: Uhlmann Pac-Systeme GmbH & Co. KG, 88471 Laupheim (DE)
(72) Erfinder: Hähnel, Bernd, 76297 Stutensee (DE)
(74) Vertreter: Wächter, Jochen

(56) Entgegenhaltungen:
- WO-A1-97/06083
- DE-A1- 2 060 219
- DE-A1- 3 014 896
- DE-A1- 10 331 875

## Beschreibung

Die Erfindung betrifft eine Vorrichtung zum Übergeben und Ineinanderstapeln von Blisterverpackungen.

In der Regel werden Blisterverpackungen vor deren Kartonierung in der Verpackungslinie gleichsinnig gestapelt. Dies bedeutet, dass die Näpfe der Blisterverpackungen im Stapel immer nach unten bzw. immer nach oben ausgerichtet sind.

In Ausnahmefällen kann jedoch auch ein Paar von Blisterverpackungen gegensinnig gestapelt werden, so dass sich die Näpfe der Blisterverpackungen immer paarweise gegenüber liegen. Dies macht immer dann Sinn, wenn die Blisterverpackungen über hohe Näpfe verfügen und diese auf den Blisterverpackungen so angeordnet sind, dass sich die Näpfe des Paares von Blisterverpackungen sozusagen "verzahnen" lassen. Auf diese Weise kann die Stapelhöhe der Blisterverpackungen und damit die Höhe der Faltschachtel, in die der Stapel von Blisterverpackungen eingebracht werden soll, nahezu halbiert werden.

Für dieses gegensinnige Ineinanderstapeln von Blisterverpackungen existiert eine Vielzahl von Lösungen. In der Regel handelt es sich um komplexe mechanische Konstruktionen und meist auch um Maschinen enormen Ausmaßes. Dies führt zu großen Herstellungskosten und zu einer beträchtlichen Verlängerung der Verpackungslinie.

Eine solche Einrichtung ist aus DE 30 14 896 A1 bekannt und entspricht dem Oberbegriff von Anspruch 1 und 12.

Der vorliegenden Erfindung liegt die Aufgabe zugrunde, eine Vorrichtung zum Übergeben und Ineinanderstapeln von Blisterverpackungen zu schaffen, die auf einfache Weise ein gegensinniges Ineinanderstapeln von Blisterverpackungen ermöglicht und dabei besonders wenig Platz beansprucht, sowie ein Verfahren zum Übergeben und gegensinnigen Ineinanderstapeln von Blisterverpackungen anzugeben, welches sich auf einfache Weise und mit geringem Platzbedarf durchführen lässt.

Diese Aufgabe wird durch die Merkmale des Anspruchs 1 bzw. des Anspruchs 12 gelöst.

Erfindungsgemäß weist die Vorrichtung zum Übergeben und Ineinanderstapeln von Blisterverpackungen eine erste Transport- oder Lagervorrichtung zum Bereitstellen von Blisterverpackungen und eine zweite Transport- oder Lagervorrichtung zum Entgegennehmen von Blisterverpackungen auf, wobei die zweite Transport- oder Lagervorrichtung unterhalb der ersten Transport- oder Lagervorrichtung angeordnet ist und mit dieser einen Zwischenraum einschließt. Die Vorrichtung weist außerdem eine in dem Zwischenraum angeordnete Übergabevorrichtung für die Blisterverpackungen auf, die dazu dient, die Blisterverpackungen von der ersten Transport- oder Lagervorrichtung entgegenzunehmen und an die zweite Transport- oder Lagervorrichtung abzugeben, wobei die Übergabevorrichtung mindestens einen Aufnahmeabschnitt aufweist, der zur Aufnahme von mindestens zwei Blisterverpackungen geeignet ist und um mindestens 180 ° um eine erste Drehachse drehbar ist.

Mit dieser Ausgestaltung können Blisterverpackungen auf einfache Weise aufgenommen, gegensinnig ineinandergestapelt und wieder abgegeben werden, wobei der Platzbedarf auf ein Mindestmaß reduziert bleibt.

In einer bevorzugten Ausführungsform weist die Übergabevorrichtung ein Mittel zur Höhenverstellung des mindestens einen Aufnahmeabschnitts auf, und die erste Drehachse ist somit bezüglich ihrer Höhenlage variierbar. Dadurch wird es möglich, zwischen einer Übernahmeposition, in der jeder Aufnahmeabschnitt der Übergabevorrichtung möglichst nahe an der ersten Transport- oder Lagervorrichtung positioniert ist, und einer Abgabeposition, bei der jeder Aufnahmeabschnitt der Übergabevorrichtung möglichst nahe an der zweiten Transport- oder Lagervorrichtung positioniert ist, zu wechseln. Außerdem kann beim Drehvorgang des Aufnahmeabschnitts jeweils ein ausreichender Abstand zur ersten Transport-oder Lagervorrichtung bzw. zur zweiten Transport- oder Lagervorrichtung eingestellt werden, damit die 180°-Drehung des Aufnahmeabschnitts stattfinden kann, ohne an der ersten Transport- oder Lagervorrichtung bzw. der zweiten Transport- oder Lagervorrichtung anzuschlagen.

Dabei ist der mindestens eine Aufnahmeabschnitt durch das Mittel zur Höhenverstellung vorzugsweise um eine zweite stationäre Drehachse drehbar. Durch diese Kombination der beiden Drehbewegungen lässt sich die Höhenverstellung des Aufnahmeabschnitts auf einfache Weise mit der 180°-Drehung des Aufnahmeabschnitts korrelieren.

Auf besonders einfache Weise gelingt dies, wenn die erste Drehachse und die zweite Drehachse in einem Abstand und parallel zueinander angeordnet sind.

In einer ersten bevorzugten Ausführungsform weist das Mittel zur Höhenverstellung mindestens einen Hebel auf, in dessen erstem Endabschnitt im Bereich der ersten Drehachse eine erste Welle drehbar gelagert ist, die mit dem Aufnahmeabschnitt verbunden ist und zu dessen 180°-Drehung dient. Außerdem ist im zweiten Endabschnitt des Hebels im Bereich der zweiten Drehachse eine in einem stationären Gehäuse drehbar gelagerte zweite Welle zur Drehung des Hebels und damit zur Höhenverstellung der ersten Drehachse und des Aufnahmeabschnitts angeordnet. Mit einer solchen Ausgestaltung lassen sich auf einfache Weise Blisterverpackungen gegensinnig ineinanderstapeln, wobei dieselben Schmalseiten der beiden Blisterverpackungen im gestapelten Zustand übereinander liegen.

Eine Synchronisierung der ersten und zweiten Drehbewegung des Aufnahmeabschnitts erhält man auf einfache Weise, wenn die erste Welle und die zweite Welle mittels eines ersten Antriebs und eines zweiten Antriebs über Zahnriemen antreibbar sind.

In einer alternativen Ausführungsform weist das Mittel zur Höhenverstellung mindestens einen Schwenkarm auf, in dessen erstem Endabschnitt im Bereich der ersten Drehachse eine erste Welle drehbar gelagert ist, die mit einer Aufnahmeplatte verbunden ist, die den mindestens einen Aufnahmeabschnitt aufweist, wobei die erste Welle zur 180°-Drehung der Aufnahmeplatte mit dem mindestens einem Aufnahmeabschnitt dient. Außerdem ist im zweiten Endabschnitt des Schwenkarms im Bereich der zweiten Drehachse eine in einem stationären Gehäuse drehbar gelagerte zweite Welle zur Drehung des Schwenkarms und damit zur Höhenverstellung der ersten Drehachse und des Aufnahmeabschnitts angeordnet. Mit dieser Ausgestaltung können Blisterverpackungen auf einfache Weise gegensinnig ineinandergestapelt werden, wobei jeweils unterschiedliche Schmalseiten der Blisterverpackungen übereinander zu liegen kommen.

Alternativ zur Drehung um eine zweite Drehachse kann das Mittel zur Höhenverstellung des mindestens einen Aufnahmeabschnitts auch eine lineare Höhenverstellung des Aufnahmeabschnitts bewirken.

In allen vorgenannten Ausführungsformen ist es bevorzugt, dass jeder Aufnahmeabschnitt mindestens einen oberen Schieber und mindestens einen unteren Schieber aufweist, welche zum Festhalten und zum Freigeben der aufgenommenen Blisterverpackungen dienen. Auf diese Weise reduziert sich die Anzahl von Bauteilen des Aufnahmeabschnitts, und der Vorgang der Aufnahme der ersten Blisterverpackung, der 180°-Drehung der ersten Blisterverpackung im festgeklemmten Zustand, der Aufnahme der zweiten Blisterverpackung und der Abgabe der beiden gegensinnig ineinandergestapelten Blisterverpackungen an die zweite Transport- oder Lagervorrichtung wird auf einfache Weise ermöglicht. Eine einfache Ansteuerung der Schieber erzielt man, indem die Schieber pneumatisch bewegbar sind.

Wenn die ineinander zu stapelnden Blisterverpackungen zusätzlich horizontal in gewissem Umfang versetzt zueinander abgelegt werden sollen, ist es von Vorteil, dass der mindestens eine Aufnahmeabschnitt über einen dritten Antrieb in Horizontalrichtung verschiebbar ist.

Das erfindungsgemäße Verfahren zum Übergeben und Ineinanderstapeln von Blisterverpackungen weist folgende Schritte auf: Bereitstellen von Blisterverpackungen durch eine erste Transport- oder Lagervorrichtung; Entgegennehmen der Blisterverpackungen von der ersten Transport- oder Lagervorrichtung und Abgeben der Blisterverpackungen an eine zweite Transport- oder Lagervorrichtung mittels einer Übergabevorrichtung mit mindestens einem Aufnahmeabschnitt; und Entgegennehmen der Blisterverpackungen in der zweiten Transport- oder Lagervorrichtung. Dabei wird in jedem Aufnahmeabschnitt der Übergabevorrichtung an einer Übernahmeposition eine erste Blisterverpackung aufgenommen, der Aufnahmeabschnitt mit der ersten Blisterverpackung wird um 180° um eine erste Drehachse gedreht, und an der Übernahmeposition wird eine zweite Blisterverpackung im Aufnahmeabschnitt aufgenommen und auf die erste umgedrehte Blisterverpackung abgelegt.

Mit diesem Verfahren ist es auf einfache Weise möglich, gegensinnig ineinandergestapelte Blisterverpackungen auf äußerst geringem Platz zu erzeugen.

Zum Festhalten und zum Freigeben der in dem Aufnahmeabschnitt aufgenommen Blisterverpackungen wird vorzugsweise eine Mehrzahl von Schiebern betätigt. Bei geeigneter Ansteuerung der Schieber können diese die einzigen Auflageflächen des Aufnahmeabschnitts bilden.

Die Höhenlage jedes Aufnahmeabschnitts wird vorzugsweise zwischen der Übernahmeposition zur Aufnahme der Blisterverpackungen und einer tiefer liegenden Abgabeposition zur Abgabe der Blisterverpackungen verstellt. Dadurch wird die Aufnahme und Abgabe der Blisterverpackungen aufgrund der Reduzierung der Fallhöhe der Blisterverpackungen verbessert.

In einer bevorzugten Ausführungsform wird die Höhenlage jedes Aufnahmeabschnitts während seiner 180°-Drehbewegung um die erste Drehachse in einem Bereich zwischen der Übernahmeposition und der Abgabeposition verstellt. Auf diese Weise wird eine Behinderung der 180°-Drehbewegung des Aufnahmeabschnitts durch die erste Transport- oder Lagervorrichtung bzw. die zweite Transport- oder Lagervorrichtung ausgeschlossen und es wird gewährleistet, dass die Übernahmeposition besonders nahe an der ersten Transport-oder Lagervorrichtung und die Abgabeposition besonders nahe an der zweiten Transport-oder Lagervorrichtung liegen kann.

Weitere Einzelheiten und Vorteile der vorliegenden Erfindung ergeben sich aus der nachfolgenden Beschreibung unter Bezugnahme auf die Zeichnungen.
- Fig.1: ist eine schematische Perspektivansicht einer ersten Ausführungsform der erfindungsgemäßen Vorrichtung zum Übergeben und Ineinanderstapeln von Blisterverpackungen;
- Fig. 2: ist eine schematische Perspektivansicht der Vorrichtung aus Fig. 1 mit geöff- netem Gehäuse;
- Fig. 3: ist ein schematischer Querschnitt entlang der Linie I-I aus Fig. 2; und
- Fig. 4: ist eine schematische Perspektivansicht der Vorrichtung aus Fig. 1 zu Beginn eines Übernahme-/Abgabezyklus;
- Fig. 5: ist eine schematische Perspektivansicht der Vorrichtung aus Fig. 1 in einer ersten Zwischenposition des Übernahme-/Abgabezyklus;
- Fig. 6: ist eine schematische Perspektivansicht der Vorrichtung aus Fig. 1 in einer zweiten Zwischenposition des Übernahme-/Abgabezyklus;
- Fig. 7: ist eine schematische Perspektivansicht der Vorrichtung aus Fig. 1 in einer dritten Zwischenposition des Übernahme-/Abgabezyklus;
- Fig. 8: ist eine schematische Seitenansicht der Vorrichtung aus Fig. 1 in einer End- position des Übernahme-/Abgabezyklus;
- Fig. 9a)-d): sind Draufsichten auf Paare von Blisterverpackungen, welche mit der Ausfüh- rungsform der Vorrichtung aus Fig. 1 bis Fig. 8 gegensinnig ineinandergesta- pelt wurden;
- Fig. 10: ist eine schematische Perspektivansicht einer zweiten Ausführungsform der erfindungsgemäßen Vorrichtung zum Übergeben und Ineinanderstapeln von Blisterverpackungen;
- Fig. 11: ist eine Draufsicht auf Paare von Blisterverpackungen, die mit der Vorrichtung aus Fig. 10 gegensinnig ineinandergestapelt wurden; und
- Fig. 12: ist eine schematische Perspektivansicht einer dritten Ausführungsform der erfindungsgemäßen Vorrichtung zum Übergeben und Ineinanderstapeln von Blisterverpackungen.

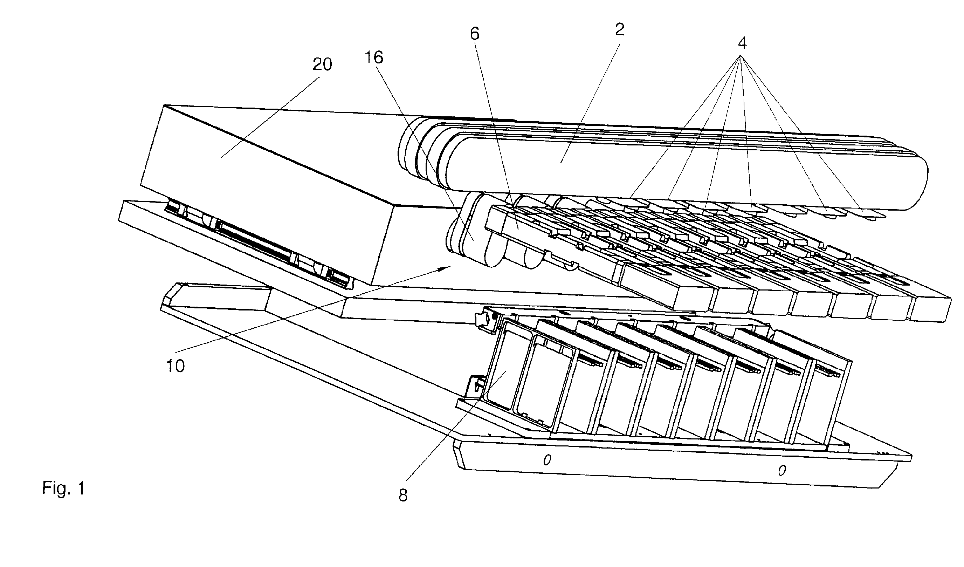

In Fig. 1 ist eine erste Ausführungsform der erfindungsgemäßen Vorrichtung zum Übergeben und Ineinanderstapeln von Blisterverpackungen dargestellt. Die Vorrichtung umfasst eine erste Transport- oder Lagervorrichtung 2, an der Blisterverpackungen 4 herantransportiert bzw. bereitgestellt werden. Im dargestellten Ausführungsbeispiel ist die erste Transport- oder Lagervorrichtung 2 als Saugband ausgestaltet, an dem die Blisterverpackungen 4 hängend in Reihe herantransportiert werden. Die Blisterverpackungen 4 können dabei unter Zuhilfenahme von Anschlägen (nicht dargestellt) in einem vorgegebenen Teilungsabstand gehalten werden und durch Abschlagelemente (nicht dargestellt) nach unten abgeschlagen werden. Ebenso ist es möglich, als erste Transport- oder Lagervorrichtung 2 ein Magazin oder eine Zwischenablage vorzusehen, welche die Blisterverpackungen 4 aufnimmt und diese beispielsweise durch Öffnen von Bodenklappen (nicht dargestellt) nach unten freigibt.

In der dargestellten Ausführungsform werden die Blisterverpackungen 4 mit den Näpfen nach unten durch die erste Transport- oder Lagervorrichtung bereitgestellt. Ebenso ist es möglich, Blisterverpackungen 4 zu bearbeiten, welche mit den Näpfen nach oben angeliefert werden.

Die von der ersten Transport- oder Lagervorrichtung 2 abgegebenen Blisterverpackungen 4 werden durch eine Übergabevorrichtung 6 entgegengenommen und an eine zweite Transport- oder Lagervorrichtung 8 abgegeben. Die zweite Transport- oder Lagervorrichtung 8 ist im dargestellten Beispielsfall als Stapelmagazin ausgebildet, in dessen Fächern die jeweiligen Blisterverpackungen 4 übereinander in Stapeln abgelegt werden. Anschließend können die Stapel von Blisterverpackungen 4 in einen Packguttransport (nicht dargestellt) des Kartonierers übergeben werden. Ebenso ist es möglich, die zweite Transport- oder Lagervorrichtung 8 als Transportband oder als Packgutkette auszubilden.

Im dargestellten Beispielsfall ist die zweite Transport- oder Lagervorrichtung 8 unterhalb der ersten Transport- oder Lagervorrichtung 2 angeordnet und schließt mit dieser einen Zwischenraum 10 ein, in dem sich die Übergabevorrichtung 6 befindet. Die Übergabevorrichtung 6 dient dabei nicht nur zum Transfer der Blisterverpackungen 4 von der ersten Transport- oder Lagervorrichtung 2 zur zweiten Transport- oder Lagervorrichtung 8, sondern auch dazu, die Blisterverpackungen 4 jeweils in Paaren von zwei gegensinnig aufeinander abgelegten Blisterverpackungen 4 zusammenzufügen und als solche Paare nach unten abzugeben.

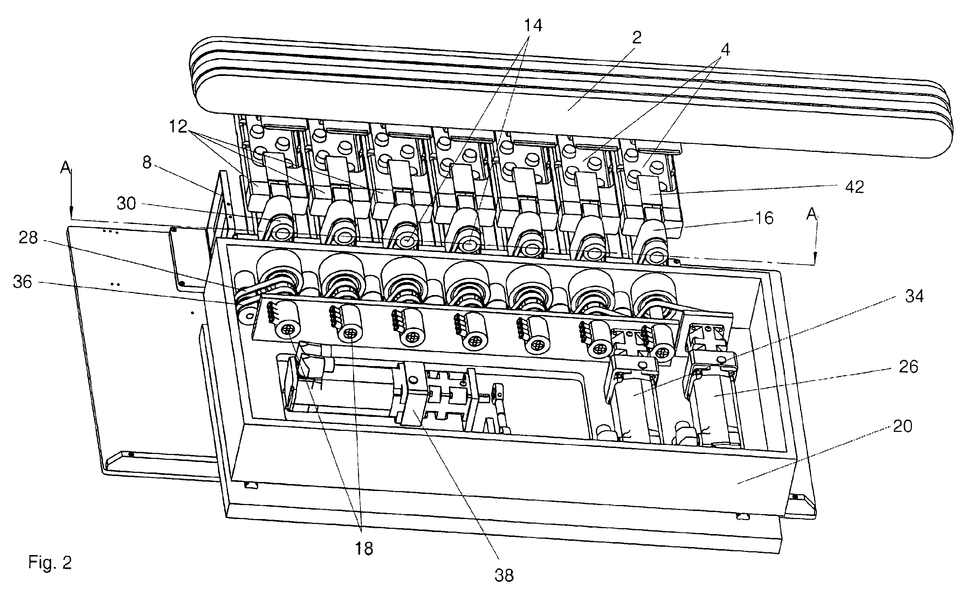

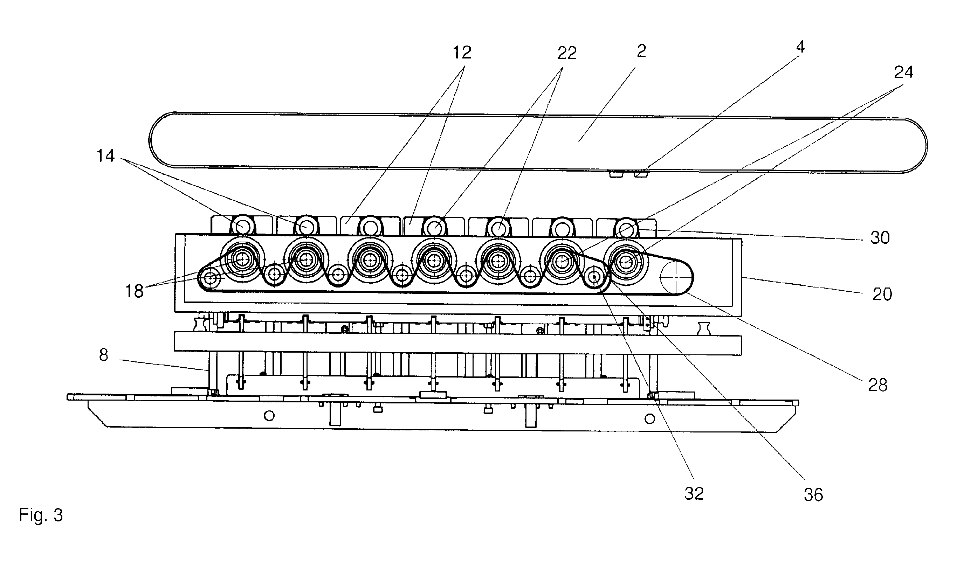

Wie im Detail aus Fig. 2 und Fig. 3 hervorgeht, weist die Übergabevorrichtung 6 hierzu mehrere in Reihe angeordnete Aufnahmeabschnitte 12 zur Aufnahme der Blisterverpackungen 4 auf. Die Aufnahmeabschnitte 12 sind in der hier dargestellten Ausführungsform jeweils einzeln über eine erste Welle 14 drehbar in einem ersten Endabschnitt eines jeweils zugeordneten Hebels 16 (siehe Fig. 1) drehbar gelagert. Der Hebel 16 wiederum ist über eine in seinem zweiten Endabschnitt befestigte zweite Welle 18 in einem stationärem Gehäuse 20 drehbar gelagert. Somit bewirkt eine Drehung der ersten Welle 14 eine Drehung der Aufnahmeabschnitte 12 um eine erste Drehachse 22, während die Drehung der zweiten Welle 18 eine Drehung des Hebels 16 um eine zweite Drehachse 24 bewirkt. Die erste Drehachse 22 und die zweite Drehachse 24 eines jeweiligen Hebels 16 sind dabei parallel und versetzt zueinander angeordnet, vorzugsweise untereinander. Eine Drehung der ersten Welle 14 um die erste Drehachse 22 bewirkt somit eine Auslenkung des Aufnahmeabschnitts 12 aus der horizontalen Lage. Der Aufnahmeabschnitt 12 dreht sich damit sozusagen um sich selbst und der Drehbereich umfasst mindestens 180°. Nach einer 180°-Drehung steht das Aufnahmeelement 12 dementsprechend auf dem Kopf.

Eine Drehung der zweiten Welle 18 um die zweite Drehachse 24 hingegen bewirkt eine seitliche Kippung des Hebels 16 und damit auch des Aufnahmeabschnitts 12, wodurch neben einer seitlichen Versetzung auch eine Höhenverstellung des Aufnahmeabschnitts 12 erfolgt. Der Hebel 16 bildet also in Kombination mit der zweiten Welle 18 ein Mittel zur Höhenverstellung des Aufnahmeabschnitts 12.

Die ersten Wellen 14 werden mittels eines ersten Antriebs 26 angetrieben, vorzugsweise über Zahnriemen 28, 30, im vorliegenden Fall unter Zwischenschaltung einer weiteren Welle 32.

Die Drehung der zweiten Welle 18 um die zweite Drehachse 24 hingegen erfolgt mittels eines zweiten Antriebs 34, vorzugsweise ebenfalls unter Zuhilfenahme von Zahnriemen 36. In der dargestellten Ausführungsform finden die beiden Drehbewegungen um die erste Drehachse 22 und um die zweite Drehachse 24 jeweils synchron statt.

Falls nötig, kann ein zusätzlicher dritter Antrieb 38 vorgesehen sein, der eine Bewegung in Horizontalrichtung quer zur Laufrichtung, welche die Blisterverpackungen 4 in der ersten Transport- oder Lagervorrichtung 2 haben, ermöglicht. Dies ist dann nötig, wenn die von dem Aufnahmeabschnitt 12 aufzunehmenden Paare von Blisterverpackungen 4 aufgrund der Anordnung der Blisternäpfe quer verschachtelt werden müssen.

In der dargestellten Ausführungsform ist eine Reihe von Aufnahmeabschnitten 12 nebeneinander angeordnet. Die Anordnung und Anzahl der Aufnahmeabschnitte 12 ist jedoch beliebig wählbar; durch die Anzahl der Aufnahmeabschnitte 12 wird die Leistungsfähigkeit der Übergabevorrichtung 6 bestimmt. Die Aufnahmeabschnitte 12 sind vorzugsweise austauschbare Teile, die vom jeweiligen Format der zu übergebenden Blisterverpackungen 4 abhängen.

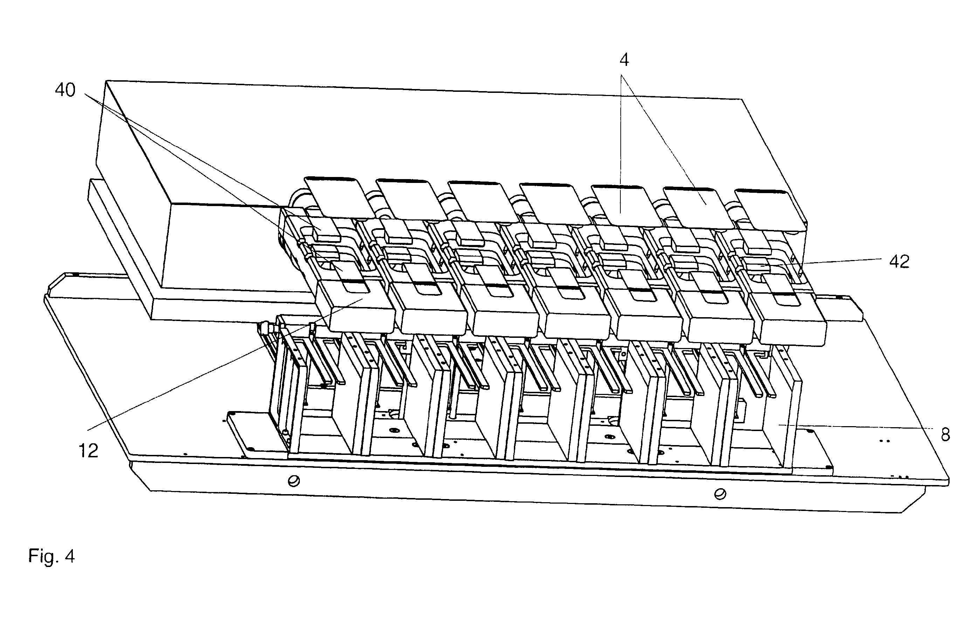

Jeder Aufnahmeabschnitt 12 weist mindestens einen oberen Schieber 40 (in der dargestellten Ausführungsform zwei gegenüberliegend angeordnete obere Schieber 40, siehe Fig. 4) und mindestens einen unteren Schieber 42 (in der dargestellten Ausführungsform zwei gegenüberliegend angeordnete untere Schieber 42) auf, die als Auflagefläche für die zu übergebenden Blisterverpackungen 4 dienen. Gleichzeitig werden die in den Aufnahmeabschnitten 12 aufgenommenen Blisterverpackungen 4 durch die Schieber 40, 42 festgehalten und gegen ein Herausfallen gesichert, bis sie wieder freigegeben werden.

Die Schieber 40, 42 werden vorzugsweise separat bewegt und entsprechend dem jeweiligen Zeitpunkt im Übernahme-/Abgabezyklus geöffnet und geschlossen. Die Bewegung kann über Servomotoren oder bevorzugt pneumatisch gesteuert erfolgen.

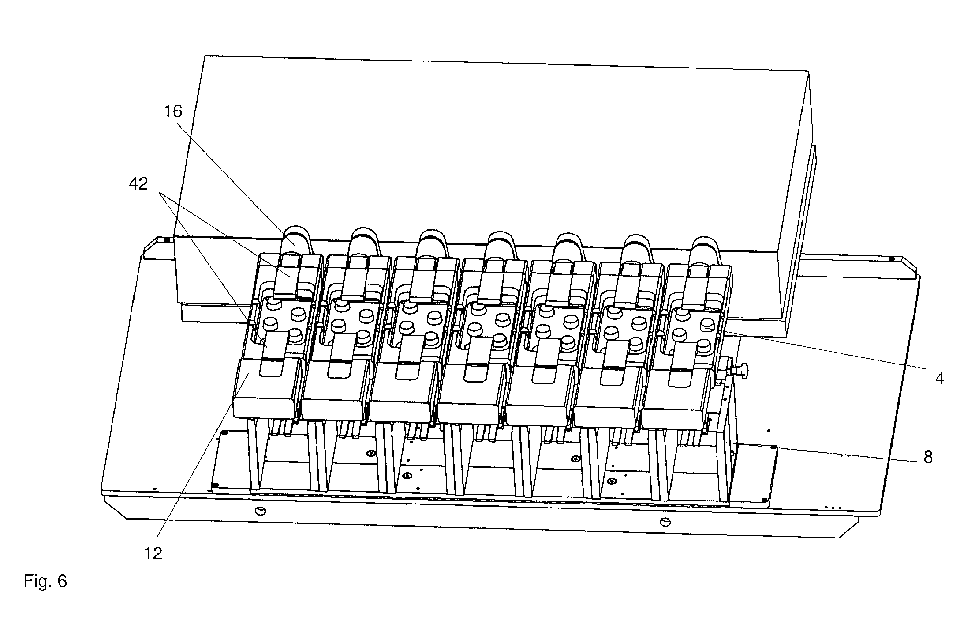

In Fig. 4 bis 8 sind unterschiedliche Stadien des Übernahme-/Abgabezyklus von Blisterverpackungen 4 in der Übergabevorrichtung 6 dargestellt. Dabei wurde aus Gründen der Übersichtlichkeit die erste Transport- oder Lagervorrichtung 2 weggelassen.

In Fig. 4 ist der Beginn eines Übernahme-/Abgabezyklus dargestellt. Eine Anzahl von Blisterverpackungen 4 ist gerade durch die erste Transport- oder Lagervorrichtung 2 bereitgestellt worden. Die Hebel 16 befinden sich in einer nach oben gerichteten vertikalen Stellung, so dass die Aufnahmeabschnitte 12 in einer Übernahmeposition parallel unter den Blisterverpackungen 4 stehen. Die unteren Schieber 42 sind geschlossen, die oberen Schieber 40 sind geöffnet. Die Blisterverpackungen 4 werden nunmehr von der ersten Transport- oder Lagervorrichtung 2 gelöst bzw. freigegeben und werden durch den jeweiligen Aufnahmeabschnitt 12 aufgenommen. Danach werden die oberen Schieber 40 geschlossen.

Die Hebel 16 und die Aufnahmeabschnitte 12 führen nunmehr zwei koordinierte Drehbewegungen aus, so dass sich die Aufnahmeabschnitte 12 um 180° um die erste Drehachse 22 drehen können, ohne mit der ersten Transport- oder Lagervorrichtung 2 bzw. der zweiten Transport- oder Lagervorrichtung 8 zu kollidieren. Die Hebel 16 werden also gleichzeitig zur Drehung der Aufnahmeabschnitte 12 um die zweite Drehachse 24 gedreht und die Aufnahmeabschnitte 12 somit in ihrer Höhenlage nach unten verstellt. Immer noch sind die oberen Schieber 40 und die unteren Schieber 42 geschlossen und halten die jeweilige Blisterverpackung 4 zwischen sich fest.

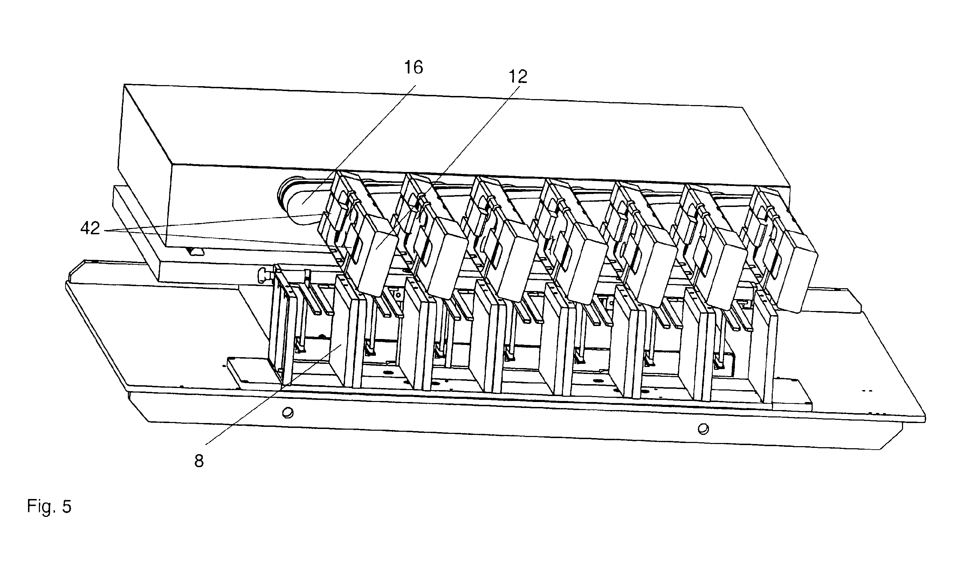

Am Ende der in Fig. 5 dargestellten Bewegung stehen die Hebel 16 wieder in der nach oben gerichteten vertikalen Position und die Aufnahmeabschnitte 12 wieder in der jeweiligen Übernahmeposition unmittelbar unterhalb der ersten Transport- oder Lagervorrichtung 2. Die in den Aufnahmeabschnitten 12 aufgenommenen Blisterverpackungen 4 sind inzwischen aber um 180° gedreht, so dass deren Näpfe nach oben zeigen. Nunmehr werden die unteren Schieber 42, welche aufgrund der 180°-Drehung oben liegen, geöffnet, so dass eine zweite Reihe von Blisterverpackungen 4 von den Aufnahmeabschnitten 12 aufgenommen werden kann.

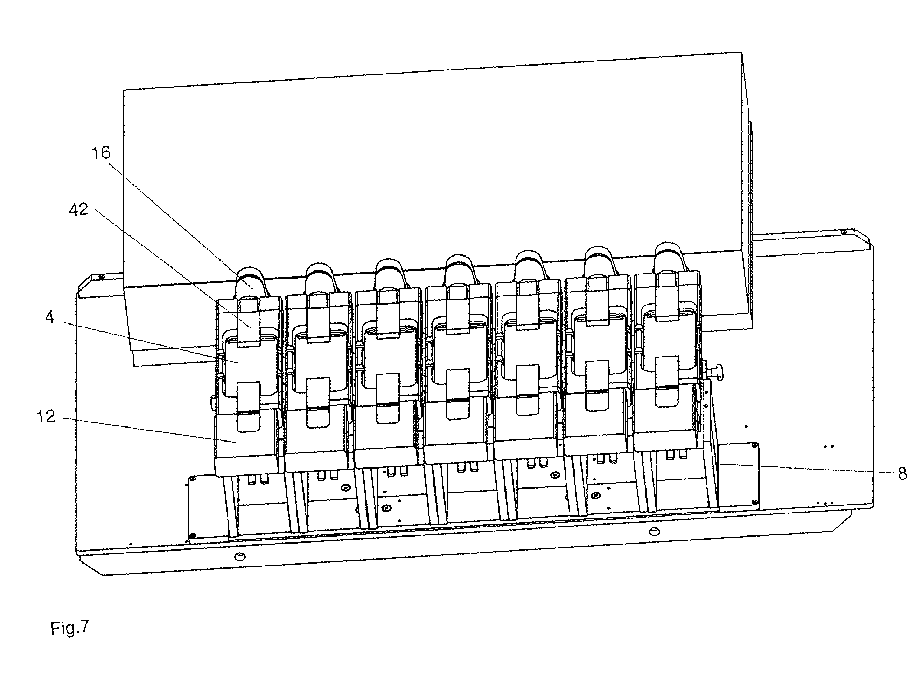

In Fig. 7 ist ein vollständiges Paar von Blisterverpackungen 4 von den Aufnahmeabschnitten 12 aufgenommen worden. Die oben liegenden unteren Schieber 42 haben sich wieder geschlossen.

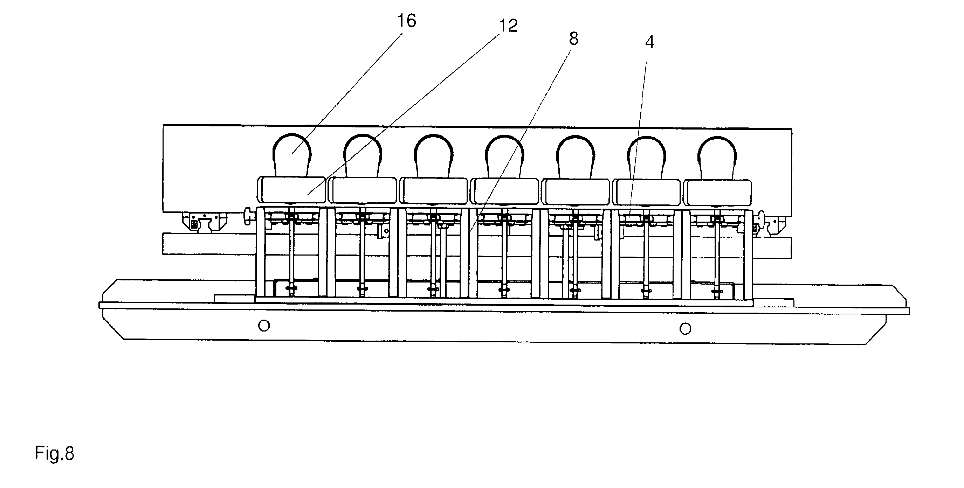

In Fig. 8 haben sich die Hebel 16 um 180° in Richtung der zweiten Transport- oder Lagervorrichtung 8 bewegt. Die Aufnahmeabschnitte 12 mit dem Paar von Blisterverpackungen 4, das gegensinnig aufeinander gestapelt ist, d.h. dessen Blisternäpfe einander zugewandt sind, stehen parallel über der zweiten Transport- oder Lagervorrichtung 8. Durch Öffnen der unteren Schieber 42 sind die Paare von Blisterverpackungen 4 in die zweite Transport-oder Lagervorrichtung 8 abgegeben worden. Die hier dargestellte Abgabeposition der Aufnahmeabschnitte 12 befindet sich möglichst dicht an der zweiten Transport- oder Lagervorrichtung 8.

Anschließend bewegen sich die Hebel 16 wieder in die obere vertikale Stellung und die Aufnahmeabschnitte 12 stehen wieder parallel in ihrer Übernahmeposition unterhalb der ersten Transport- oder Lagervorrichtung 2.

Dieser Übernahme-/Abgabezyklus kann wiederholt werden, bis in der zweiten Transport-oder Lagervorrichtung 8 die vorgesehene Stapelhöhe erreicht ist.

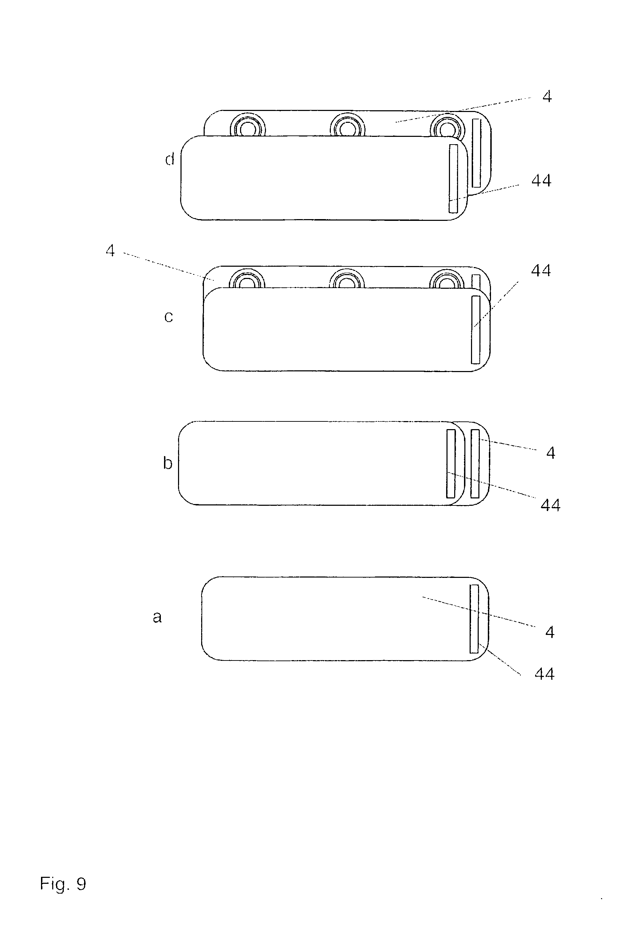

In Fig. 9a)-d) ist dargestellt, welche Varianten des gegensinnigen Ineinanderstapelns von Blisterverpackungen mit der beschriebenen Übergabevorrichtung 6 realisierbar sind. Allen Varianten ist gemeinsam, dass dieselbe Schmalseite 44 der Blisterverpackung 4 immer auf der gleichen Seite angeordnet ist.

In Fig. 9a) liegt das Paar von Blisterverpackungen 4 übereinander. Dies wird dadurch erreicht, dass die erste Drehachse 22 der Aufnahmeabschnitte 12 symmetrisch angeordnet ist.

In Fig. 9b) ist das Paar von Blisterverpackungen 4 in Längsrichtung versetzt. Dies wird dadurch erreicht, dass die zwei Seiten der Aufnahmeabschnitte 12 entsprechend versetzt sind. Um die Aufnahme der Blisterverpackungen 4 von der ersten Transport- oder Lagervorrichtung 2 zu gewährleisten, wo diese ohne Versatz ankommen, wird nach der Aufnahme der ersten Blisterverpackung 4 im Aufnahmeabschnitt 12 die komplette Übergabevorrichtung 6 über den dritten Antrieb 38 verschoben.

In Fig. 9c) sind die Blisterverpackungen 4 in Laufrichtung versetzt. Dies wird dadurch erreicht, dass wiederum die Aufnahmeabschnitte 12 entsprechend mit dem Versatz ausgebildet sind. Außerdem ist die erste Drehachse 22 der Aufnahmeabschnitte 12 asymmetrisch versetzt. Um die asymmetrische Drehung der Aufnahmeabschnitte 12 zu kompensieren, bleiben die Hebel 16 während der Aufnahme der Blisterverpackungen 4 durch die Aufnahmeabschnitte 12 nicht im oberen Totpunkt stehen, sondern bleiben in einem sinnvollen Winkel vor bzw. nach dem Totpunkt stehen.

Die in Fig. 9d) dargestellte Variante ist eine Kombination der Varianten aus Fig. 9b) und 9c).

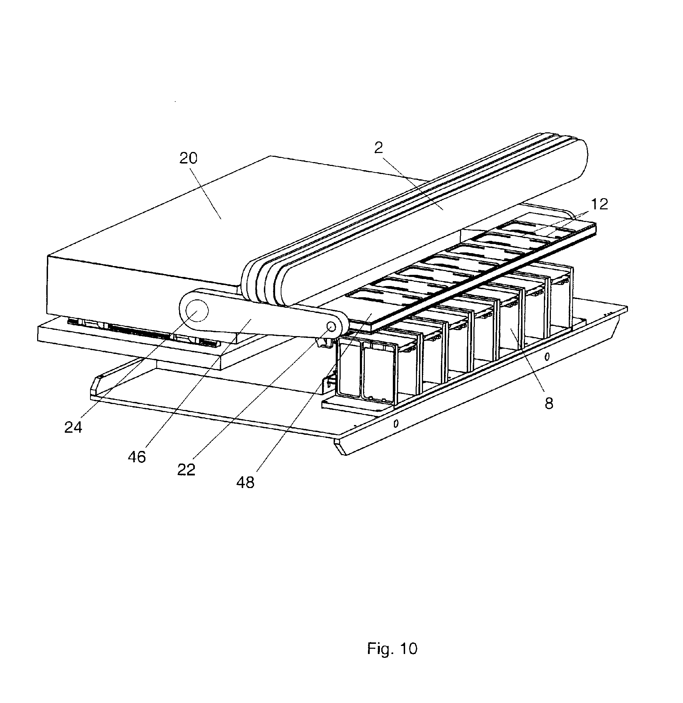

In der in Fig. 10 dargestellten zweiten Ausführungsform der erfindungsgemäßen Vorrichtung zum Übergeben und Ineinanderstapeln von Blisterverpackungen ist das Mittel zur Höhenverstellung der Aufnahmeabschnitte 12 anders ausgebildet. Hier übernimmt der Schwenkarm 46 die Funktion der Hebel 16 der vorher beschriebenen Ausführungsform. Im Unterschied zur vorgenannten Ausführungsform sind die Aufnahmeabschnitte 12 nicht einzeln ausgebildet, sondern sind integral in einer Aufnahmeplatte 48 angeordnet, die in einem ersten Endabschnitt des Schwenkarms 46 um die erste Drehachse 22 gedreht wird. Der Schwenkarm 46 wiederum schwenkt um die in seinem anderen Endabschnitt angeordnete zweite stationäre Drehachse 24.

Der Ablauf ist sinngemäß der gleiche wie bisher beschrieben, aber die 180°-Drehung der Aufnahmeabschnitte 12 erfolgt um ihre andere zentrale Achse, wodurch sich eine andere Anordnung der beiden übereinander gelegten Blisterverpackungen 4 ergibt.

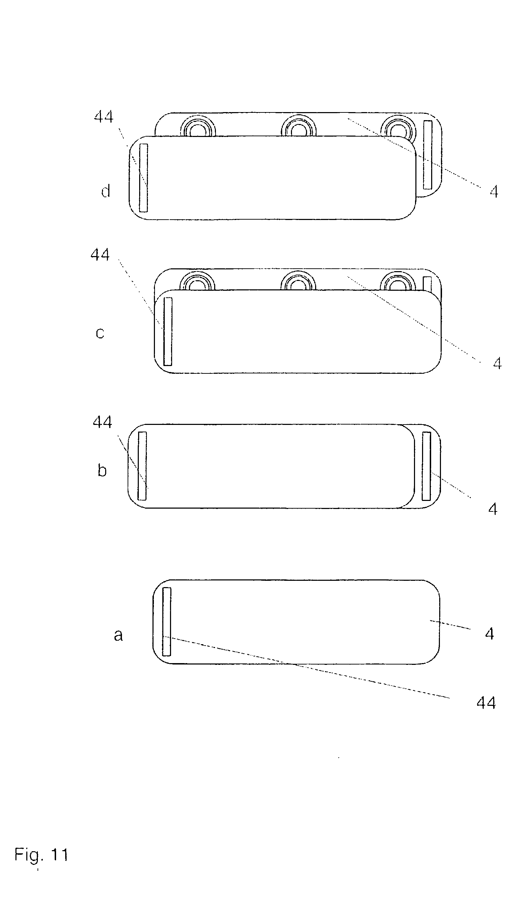

In Fig. 11a)-d) sind die Kombinationsmöglichkeiten jeweiliger Paare von Blisterverpackungen 4 bei Verwendung dieser Übergabevorrichtung 6 dargestellt.

Diese Kombinationen ergeben sich sinngemäß aus den gleichen Abläufen wie in Fig. 9a)-d). Der einzige Unterschied besteht darin, dass dieselben Schmalseiten 44 von übereinander gelegten Blisterverpackungen 4 nicht wie in Fig. 9a)-d) übereinander, sondern entgegengesetzt zueinander angeordnet sind.

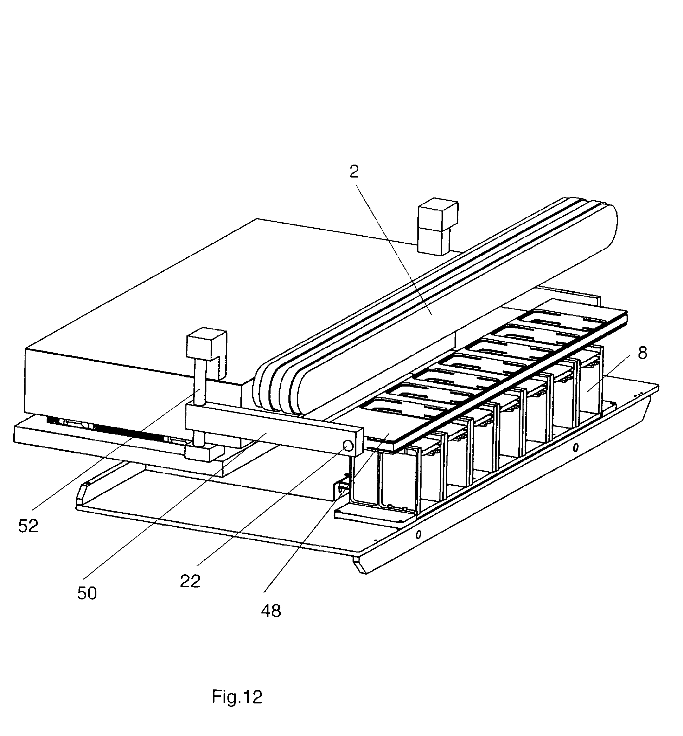

In Fig. 12 schließlich ist eine dritte Ausführungsform der erfindungsgemäßen Vorrichtung zum Übergeben und Ineinanderstapeln von Blisterverpackungen dargestellt. In dieser Ausführungsform besteht das Mittel zur Höhenverstellung aus einem linearen Verstellmechanismus 50, 52. Anstelle des Hebels 16 bzw. des Schwenkarms 46 ist in diesem Fall ein unbeweglicher Arm 50 vorgesehen, der beispielsweise an einer Spindel 52 nach oben und unten verfahrbar ist.

Neben den drei hier dargestellten Möglichkeiten kann das Mittel zur Höhenverstellung in vielen anderen Ausführungsformen ausgebildet sein, die sich dem Fachmann erschließen.

## Patentansprüche

1. Vorrichtung zum Übergeben und Ineinanderstapeln von Blisterverpackungen (4) mit
einer ersten Transport- oder Lagervorrichtung (2) zum Bereitstellen der Blisterverpackungen (4) und
einer zweiten Transport- oder Lagervorrichtung (8) zum Entgegennehmen der Blisterverpackungen (4), die mit der ersten Transport- oder Lagervorrichtung (2) einen Zwischenraum (10) einschließt,
**dadurch gekennzeichnet, dass**
die zweite Transport- oder Lagervorrichtung (8) unterhalb der ersten Transport- oder Lagervorrichtung angeordnet ist,
und die Vorrichtung eine in dem Zwischenraum (10) angeordnete Übergabevorrichtung (6) für die Blisterverpackungen (4) aufweist, die dazu dient, die Blisterverpackungen (4) von der ersten Transport- oder Lagervorrichtung (2) entgegenzunehmen und an die zweite Transport- oder Lagervorrichtung (8) abzugeben, wobei die Übergabevorrichtung (6) mindestens einen Aufnahmeabschnitt (12) aufweist, der zur Aufnahme von mindestens zwei Blisterverpackungen (4) geeignet ist und um mindestens 180° um eine erste Drehachse (22) drehbar ist.

2. Vorrichtung nach Anspruch 1, **dadurch gekennzeichnet, dass** die Übergabevorrichtung (6) ein Mittel (16, 18; 18, 46; 50, 52) zur Höhenverstellung des mindestens einen Aufnahmeabschnitts (12) aufweist und die erste Drehachse (22) somit bezüglich ihrer Höhenlage variierbar ist.

3. Vorrichtung nach Anspruch 2, **dadurch gekennzeichnet, dass** der mindestens eine Aufnahmeabschnitt (12) durch das Mittel (16, 18; 18, 46; 50, 52) zur Höhenverstellung um eine zweite stationäre Drehachse (24) drehbar ist.

4. Vorrichtung nach Anspruch 3, **dadurch gekennzeichnet, dass** die erste Drehachse (22) und die zweite Drehachse (24) in einem Abstand und parallel zueinander angeordnet sind.

5. Vorrichtung nach Anspruch 4, **dadurch gekennzeichnet, dass** das Mittel (16, 18; 18, 46; 50, 52) zur Höhenverstellung mindestens einen Hebel (16) aufweist, in dessen erstem Endabschnitt im Bereich der ersten Drehachse (22) eine erste Welle (14) drehbar gelagert ist, die mit dem Aufnahmeabschnitt (12) verbunden ist und zu dessen 180°-Drehung dient, und in dessen zweitem Endabschnitt im Bereich der zweiten Drehachse (24) eine in einem stationären Gehäuse (20) drehbar gelagerte zweite Welle (18) zur Drehung des Hebels (16) und damit zur Höhenverstellung der ersten Drehachse (22) und des Aufnahmeabschnitts (12) angeordnet ist.

6. Vorrichtung nach Anspruch 5, **dadurch gekennzeichnet, dass** die erste Welle (14) und die zweite Welle (18) mittels eines ersten Antriebs (26) und eines zweiten Antriebs (34) über Zahnriemen (28, 30, 36) antreibbar sind.

7. Vorrichtung nach Anspruch 4, **dadurch gekennzeichnet, dass** das Mittel (16, 18; 18, 46; 50, 52) zur Höhenverstellung mindestens einen Schwenkarm (46) aufweist, in dessen erstem Endabschnitt im Bereich der ersten Drehachse (22) eine erste Welle (14) drehbar gelagert ist, die mit einer Aufnahmeplatte (48) verbunden ist, die den mindestens einen Aufnahmeabschnitt (12) aufweist, wobei die erste Welle (14) zur 180°-Drehung der Aufnahmeplatte (48) mit dem mindestens einen Aufnahmeabschnitt (12) dient, und in dessen zweitem Endabschnitt im Bereich der zweiten Drehachse (24) eine in einem stationären Gehäuse (20) drehbar gelagerte zweite Welle (18) zur Drehung des Schwenkarms (46) und damit zur Höhenverstellung der ersten Drehachse (22) und des Aufnahmeabschnitts (12) angeordnet ist.

8. Vorrichtung nach Anspruch 2, **dadurch gekennzeichnet, dass** der mindestens eine Aufnahmeabschnitt (12) durch das Mittel (50, 52) zur Höhenverstellung linear höhenverstellbar ist.

9. Vorrichtung nach einem der vorangehenden Ansprüche, **dadurch gekennzeichnet, dass** jeder Aufnahmeabschnitt (12) mindestens einen oberen Schieber (40) und mindestens einen unteren Schieber (42) aufweist, welche zum Festhalten und zum Freigeben der aufgenommenen Blisterverpackungen (4) dienen.

10. Vorrichtung nach Anspruch 9, **dadurch gekennzeichnet, dass** die Schieber (40, 42) pneumatisch bewegbar sind.

11. Vorrichtung nach einem der vorangehenden Ansprüche, **dadurch gekennzeichnet, dass** der mindestens eine Aufnahmeabschnitt (12) über einen dritten Antrieb (38) in Horizontalrichtung verschiebbar ist.

12. Verfahren zum Übergeben und Ineinanderstapeln von Blisterverpackungen (4) mit folgenden Schritten:
Bereitstellen von Blisterverpackungen (4) durch eine erste Transport- oder Lagervorrichtung (2);
Entgegennehmen der Blisterverpackungen (4) von der ersten Transport- oder Lagervorrichtung (2) und Abgeben der Blisterverpackungen (4) an eine zweite Transport- oder Lagervorrichtung (8) mittels einer Übergabevorrichtung (6) mit mindestens einem Aufnahmeabschnitt (12); und
Entgegennehmen der Blisterverpackungen (4) in der zweiten Transport- oder Lagervorrichtung (8);
**dadurch gekennzeichnet, dass**
- in jedem Aufnahmeabschnitt (12) der Übergabevorrichtung (6) an einer Übernahmeposition eine erste Blisterverpackung (4) aufgenommen wird,
- der Aufnahmeabschnitt (12) mit der ersten Blisterverpackung (4) um 180° um eine erste Drehachse (22) gedreht wird, und
- an der Übernahmeposition eine zweite Blisterverpackung (4) im Aufnahmeabschnitt (12) aufgenommen und auf die erste umgedrehte Blisterverpackung (4) abgelegt wird.

13. Verfahren nach Anspruch 12, **dadurch gekennzeichnet, dass** zum Festhalten und zum Freigeben der in dem Aufnahmeabschnitt (12) aufgenommenen Blisterverpackungen (4) eine Mehrzahl von Schiebern (40, 42) betätigt wird.

14. Verfahren nach Anspruch 12 oder 13, **dadurch gekennzeichnet, dass** die Höhenlage jedes Aufnahmeabschnitts (12) zwischen der Übernahmeposition zur Aufnahme der Blisterverpackungen (4) und einer tiefer liegenden Abgabeposition zur Abgabe der Blisterverpackungen (4) verstellt wird.

15. Verfahren nach Anspruch 14, **dadurch gekennzeichnet, dass** die Höhenlage jedes Aufnahmeabschnitts (12) während seiner 180°-Drehbewegung um die erste Drehachse (22) in einen Bereich zwischen der Übernahmeposition und der Abgabeposition verstellt wird.

## Claims

1. Device for transferring and stacking blister packs (4) comprising
a first transport or storage device (2) for supplying the blister packs (4) and
a second transport or storage device (8) for accepting the blister packs (4) which together with the first transport or storage device (2) surrounds an intermediate space (10),
**characterised in that**
the second transport or storage device (8) is arranged under the first transport or storage device, and the device comprises a transfer device (6) for the blister packs (4) which is arranged in the intermediate space (10) and serves to accept the blister packs (4) from the first transport or storage device (2) and to release the blister packs to the second transport or storage device (8), the transfer device (6) comprising at least one receiving portion (12) which is adapted to receive at least two blister packs (4) and which is rotatable by at least 180° about a first axis of rotation (22).

2. Device according to claim 1, **characterised in that** the transfer device (6) comprises a means (16, 18; 18, 46; 50, 52) for adjusting the height of the at least one receiving portion (12), the height of the first axis of rotation (22) thus being variable.

3. Device according to claim 2, **characterised in that** the at least one receiving portion (12) is rotatable by the height-adjusting means (16, 18; 18, 46; 50, 52) about a second, stationary axis of rotation (24).

4. Device according to claim 3, **characterised in that** the first axis of rotation (22) and the second axis of rotation (24) are arranged at a distance from each other and mutually parallel.

5. Device according to claim 4, **characterised in that** the height-adjusting means (16, 18; 18, 46; 50, 52) comprises at least one lever (16), in the first end portion of which a first shaft (14) is rotatably mounted in the region of the first axis of rotation (22), said first shaft being connected to the receiving portion (12) and serving to rotate the receiving portion by 180°, and in the second end portion of which a second shaft (18), rotatably mounted in a stationary housing (20) is arranged in the region of the second axis of rotation (24) in order to rotate the lever (16) and thus to adjust the height of the first axis of rotation (22) and of the receiving portion (12).

6. Device according to claim 5, **characterised in that** the first shaft (14) and the second shaft (18) can be driven by a first drive (26) and a second drive (34) via toothed belts (28, 30, 36).

7. Device according to claim 4, **characterised in that** the height-adjusting means (16, 18; 18, 46; 50, 52) comprises at least one pivot arm (46), in the first end portion of which a first shaft (14) is rotatably mounted in the region of the first axis of rotation (22), said first shaft being connected to a receiving plate (48) comprising the at least one receiving portion (12), the first shaft (14) serving to rotate the receiving plate (48) having the at least one receiving portion (12) by 180°, and in the second end portion of which a second shaft (18), rotatably mounted in a stationary housing (20) is arranged in the region of the second axis of rotation (24) in order to rotate the pivot arm (46) and thus to adjust the height of the first axis of rotation (22) and of the receiving portion (12).

8. Device according to claim 2, **characterised in that** the height of the at least one receiving portion (12) is adjustable in a linear manner by the height-adjusting means (50, 52).

9. Device according to any one of the preceding claims, **characterised in that** each receiving portion (12) comprises at least one upper pusher (40) and at least one lower pusher (42), which serve to retain and release the received blister packs (4).

10. Device according to claim 9, **characterised in that** the pushers (40, 42) can be moved pneumatically.

11. Device according to any one of the preceding claims, **characterised in that** the at least one receiving portion (12) is displaceable in a horizontal direction via a third drive (38).

12. Method for transferring and stacking blister packs (4), comprising the following steps:
supplying blister packs (4) via a first transport or storage device (2);
accepting the blister packs (4) from the first transport or storage device (2) and releasing the blister packs (4) to a second transport or storage device (8) via a transfer device (6) having at least one receiving portion (12); and
accepting the blister packs (4) in the second transport or storage device (8);
**characterised in that**
- in each receiving portion (12) of the transfer device (6), a first blister pack (4) is received at a receiving position;
- the receiving portion (12) together with the first blister pack (4) is rotated by 180° about a first axis of rotation (22), and
- in the receiving position, a second blister pack (4) is received in the receiving portion (12) and deposited on the first rotated blister pack (4).

13. Method according to claim 12, **characterised in that** a plurality of pushers (40, 42) are actuated to retain and release the blister packs (4) which are received in the receiving portion (12).

14. Method according to either claim 12 or claim 13, **characterised in that** the height of each receiving portion (12) is adjusted between the receiving position for receiving the blister packs (4) and a lower release position for releasing the blister packs (4).

15. Method according to claim 14, **characterised in that** the height of each receiving portion (12) is adjusted between the receiving position and the release position during its 180° rotational movement about the first axis of rotation (22).

## Revendications

1. Dispositif de transfert et d'empilement les uns dans les autres de blisters (4), comprenant
un premier dispositif de transport ou de stockage (2) pour la préparation des blisters (4) et
un second dispositif de transport ou de stockage (8) pour la reprise des blisters (4), qui inclut un espace intermédiaire (10) avec le premier dispositif de transport ou de stockage (2),
**caractérisé en ce que** le second dispositif de transport ou de stockage (8) est disposé au-dessous du premier dispositif de transport ou de stockage, et le dispositif présente un dispositif de transfert (6) pour les blisters (4), disposé dans l'espace intermédiaire (10), lequel dispositif sert à reprendre les blisters (4) du premier dispositif de transport ou de stockage (2) et à les distribuer sur le second dispositif de transport ou de stockage (8), le dispositif de transfert (6) présentant au moins une section de réception (12), qui se prête à recevoir au moins deux blisters (4) et peut tourner d'au moins 180° autour d'un premier axe de rotation (22).

2. Dispositif suivant la revendication 1, **caractérisé en ce que** le dispositif de transfert (6) présente un moyen (16, 18 ; 18, 46 ; 50, 52) pour le réglage en hauteur de la au moins une section de réception (12) et le premier axe de rotation (22) est ainsi modifiable quant à sa position en hauteur.

3. Dispositif suivant la revendication 2, **caractérisé en ce que** la au moins une section de réception (12) peut tourner par le moyen (16, 18 ; 18, 46 ; 50, 52) de réglage en hauteur autour d'un second axe de rotation (24) stationnaire.

4. Dispositif suivant la revendication 3, **caractérisé en ce que** le premier axe de rotation (22) et le second axe de rotation (24) sont disposés à distance mutuelle et parallèlement entre eux.

5. Dispositif suivant la revendication 4, **caractérisé en ce que** le moyen (16, 18 ; 18, 46 ; 50, 52) de réglage en hauteur présente au moins un levier (16), dans la première section extrême duquel est monté tournant un premier arbre (14) dans la zone du premier axe de rotation (22), lequel arbre est assemblé avec la section de réception (12) et sert à sa rotation de 180°, et dans la seconde section extrême duquel est disposé dans la zone du second axe de rotation (24) un second arbre (18), monté tournant dans un carter stationnaire (20), pour la rotation du levier (16) et ainsi pour le réglage en hauteur du premier axe de rotation (22) et de la section de réception (12).

6. Dispositif suivant la revendication 5, **caractérisé en ce que** le premier arbre (14) et le second arbre (18) sont entraînables au moyen d'un premier entraînement (26) et d'un deuxième entraînement (34) par l'intermédiaire de courroies dentées (28, 30, 36).

7. Dispositif suivant la revendication 4, **caractérisé en ce que** le moyen (16, 18 ; 18, 46 ; 50, 52) de réglage en hauteur présente au moins un bras pivotant (46), dans la première section extrême duquel est monté tournant un premier arbre (14) dans la zone du premier axe de rotation (22), lequel arbre est assemblé avec une plaque de réception (48) qui présente la au moins une section de réception (12), le premier arbre (14) servant à la rotation de 180° de la plaque de réception (48) avec la au moins une section de réception (12), et dans la seconde section extrême duquel est disposé, dans la zone du second axe de rotation (24), un second arbre (18) monté tournant dans un carter stationnaire (20) pour la rotation du bras pivotant (46) et ainsi pour le réglage en hauteur du premier axe de rotation (22) et de la section de réception (12).

8. Dispositif suivant la revendication 2, **caractérisé en ce que** la au moins une section de réception (12) est ajustable linéairement en hauteur par le moyen (50, 52) de réglage en hauteur.

9. Dispositif suivant l'une des revendications précédentes, **caractérisé en ce que** chaque section de réception (12) présente au moins un tiroir supérieur (40) et au moins un tiroir inférieur (42), qui servent au maintien et au dégagement des blisters (4) reçus.

10. Dispositif suivant la revendication 9, **caractérisé par** une possibilité de déplacement pneumatique des tiroirs (40, 42).

11. Dispositif suivant l'une des revendications précédentes, **caractérisé en ce que** la au moins une section de réception (12) est déplaçable dans la direction horizontale par l'intermédiaire d'un troisième entraînement (38).

12. Procédé de transfert et d'empilement les uns dans les autres de blisters (4), comprenant les étapes suivantes :
préparation de blisters (4) par un premier dispositif de transport ou de stockage (2) ;
reprise des blisters (4) du premier dispositif de transport ou de stockage (2) et distribution des blisters (4) sur un second dispositif de transport ou de stockage (8) au moyen d'un dispositif de transfert (6) avec au moins une section de réception (12) ; et
reprise des blisters (4) dans le second dispositif de transport ou de stockage (8) ;
**caractérisé en ce que**
- dans chaque section de réception (12) du dispositif de transfert (6), un premier blister est reçu sur une position de reprise,
- la section de réception (12) tourne de 180° avec le premier blister (4) autour d'un premier axe de rotation (22),
- un second blister (4) est reçu dans la section de réception (12) sur la position de reprise et est déposé sur le premier blister (4) tourné.

13. Procédé suivant la revendication 12, **caractérisé en ce qu'**une pluralité de tiroirs (40, 42) est actionnée pour le maintien et le dégagement des blisters (4) reçus dans la section de réception (12).

14. Procédé suivant l'une des revendications 12 et 13, **caractérisé par** le réglage de la position en hauteur de chaque section de réception (12) entre la position de reprise pour la réception des blisters (4) et une position de distribution plus basse pour les blisters (4).

15. Procédé suivant la revendication 14, **caractérisé en ce que** la position en hauteur de chaque section de réception (12) est réglée pendant son mouvement de rotation de 180° autour du premier axe de rotation (22) dans une zone comprise entre la position de reprise et la position de distribution.
